# EUROPEAN PATENT SPECIFICATION

(11) **EP 1 472 193 B1**
(45) Date of publication and mention of the grant of the patent: **29.07.2009**
(21) Application number: 02804413.9
(22) Date of filing: 05.11.2002
(51) Int. Cl.: C03C 17/00, C03C 17/22, C03C 17/28, C03C 17/30, C03C 23/00, C03C 17/34

(54) **METHOD OF USING SHORT WAVELENGTH UV LIGHT TO SELECTIVELY REMOVE A COATING FROM A SUBSTRATE AND ARTICLE PRODUCED THEREBY**
VERFAHREN ZUR VERWENDUNG VON KURZWELLIGEM UV-LICHT ZUR SELEKTIVEN ENTFERNUNG EINER BESCHICHTUNG VON EINEM SUBSTRAT UND DANACH HERGESTELLTER GEGENSTAND
PROCEDE D'UTILISATION DE LUMIERE UV DE COURTE LONGUEUR D'ONDE PERMETTANT DE RETIRER DE MANIERE SELECTIVE UN REVETEMENT D'UN SUBSTRAT, ET ARTICLE PRODUIT PAR LE BIAIS DE CE PROCEDE

(30) Priority: 29.11.2001 US 997347
(43) Date of publication of application: 03.11.2004
(73) Proprietor: Pilkington North America, Inc., Toledo, Ohio 43697 (US)
(72) Inventor: MACLACHLAN, Julia, Toledo, OH 43617 (US)
(74) Representative: Pfenning, Meinig & Partner GbR
(86) International application number: PCT/US2002/035404
(87) International publication number: WO 2003/048059

(56) References cited:
- EP-A- 0 577 187
- WO-A-01/19745
- PATENT ABSTRACTS OF JAPAN vol. 2000, no. 22, 9 March 2001 (2001-03-09) -& JP 2001 146439 A (CENTRAL GLASS CO LTD), 29 May 2001 (2001-05-29)
- PATENT ABSTRACTS OF JAPAN vol. 1999, no. 12, 29 October 1999 (1999-10-29) & JP 11 194202 A (NIKON CORP), 21 July 1999 (1999-07-21)

## Description

### BACKGROUND

A method of removing a selected portion of a coating from a substrate is disclosed. More particularly, a method of removing a functional organic coating, for example, a coating having hydrophobic properties, with short wavelength ultraviolet (UV) light from a non-conductive substrate is disclosed.

Various types of coatings are often applied to non-conductive substrates such as glass to impart different properties to the substrate. One such property which may be imparted to a substrate, such as glass, by a coating, is that of hydrophobicity. Hydrophobic coatings cause water to bead readily and run off quickly. One application where this property is useful is in the field of vehicle glazing. Application of a hydrophobic coating to a glazing in a vehicle, such as an automobile windshield, backlight or sidelight can, by its properties, cause water which comes into contact with the coating to form into beads and quickly run off the glazing so as not to obscure the outward vision of the occupants of the vehicle. Particularly for the operator of the vehicle, clearer vision is a safety benefit.

Much effort is expended in applying such hydrophobic coatings to a substrate, such as a vehicle glazing, to ensure that the coating strongly adheres to the substrate. It is, clearly, undesirable for the coating to begin to peel off the substrate, both from a functional and an aesthetic viewpoint.

It may be desirable, however, in some cases, to intentionally remove the coating from the substrate in selected areas. Such selective removal may be desirable, for example, if one wishes to adhere an item to the substrate. In the case of vehicle glazings, it is often desirable to adhere one or more gaskets to portions of the peripheral edge of the glazing. It might also be desirable to adhere an item of hardware, such as a fastening device, a mounting device, or the like, in a particular location on the glazing.

Typically, hydrophobic coatings do not readily allow adhesive materials to adhere to them. So, in order to adhere a gasket or an item of hardware to the substrate, the coating must be removed, or it must have been selectively prevented from having been applied to the substrate in the first instance.

To date, efforts to solve this problem have been directed, primarily, to selectively preventing the coating from being applied to the substrate. One method of selectively preventing application of the coating is by masking the area where no coating is desired by applying an adhesive tape, a resist material, or the like, over those areas in which the coating is not desired.

While these methods are generally effective in preventing the application of the coating, they are uniformely costly, both in the cost of the masking materials and the labor necessary to apply them. Such masking also adds a lengthy step to the manufacturing process, thus greatly increasing cycle time when, for example, one is manufacturing high volume vehicle glazings.

Patent abstracts of Japan, vol. 2000, no. 22, March 9, 2001, and JP 2001 146439 A already disclose a method for removing part of a functional coating film form the surface of a substrate. This method comprises the steps of coating a substrate with a liquid containing an organic compound followed by acuring to form a functional coating film, covering that part of the coating film not to be removed from the substrate with a light-shielding plate, followed by irradiating the film with UV rays to decompose and remove the unshielded part of the coating film. The UV rays have a spectrum of 200-450 nm with a main peak at the wavelength of 365 nm. Further, the irradiation time is in the order of 12-13 minutes. This makes this method unacceptable in a production line environment. Accordingly, it in the object of the present invention to have a means to eliminate the need for costly operations, such as masking and instead to have a quick and cost efficient method to selectively remove an organic functional coating, such as a hydrophobic coating, from a non-conductive substrate, such as glass, and one which could be readily incorporated into a time-critical, automated manufacturing process.

### SUMMARY OF THE INVENTION

This object according to the invention is solved by a method comprising the features of claim 1. Preferred embodiments of this method are defined in the subclaims.

It has been discovered that selective removal of such organic functional coatings can be efficiently accomplished by exposing the coated substrate to a source of short wavelength UV light. By short wavelength UV light is meant light having a dominant wavelength in the range of 100 nm to 200 nm. Preferably, the dominant wavelength of the UV light is 172 nm. The appropriate exposure time lies in the range of 5 to 120 seconds.

More specifically, the present invention involves the selective removal of organic functional coatings having hydrophobic properties from the surface of the dielectric substrate, such as glass, in order to promote adhesion to that portion of the substrate from which the coating has been removed.

To selectively remove the organic functional coating from a large area of a dielectric substrate, for example, around the entire periphery of a vehicle glazing, or for the selective removal of such a coating from a substrate of large dimension, for example, a vehicle windshield or backlite, multiple sources of short wavelength UV light may be used.

### BRIEF DESCRIPTION OF THE DRAWINGS

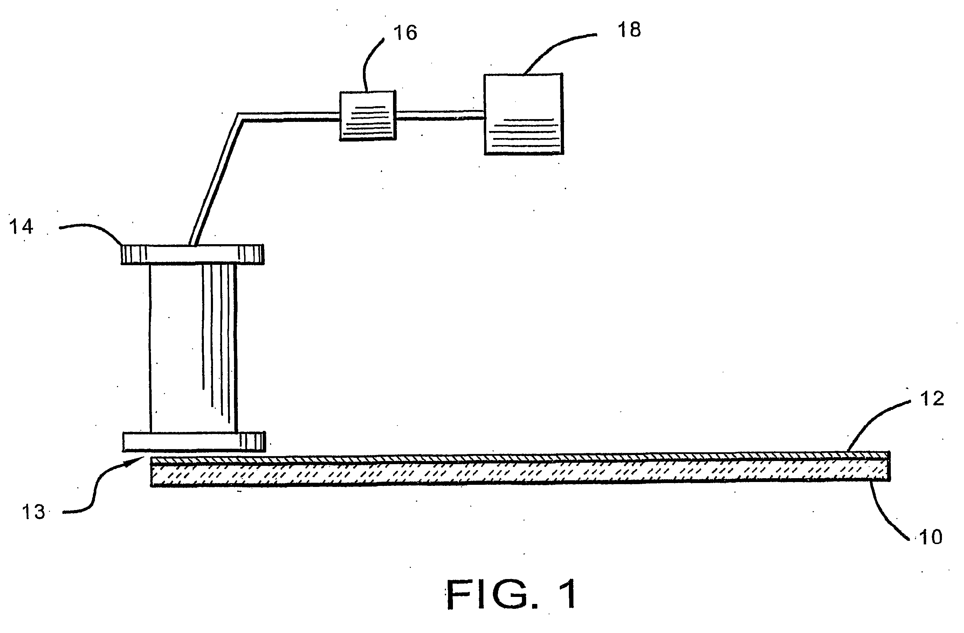

Fig. 1 is a schematic layout of a short wavelength UV light removal system.

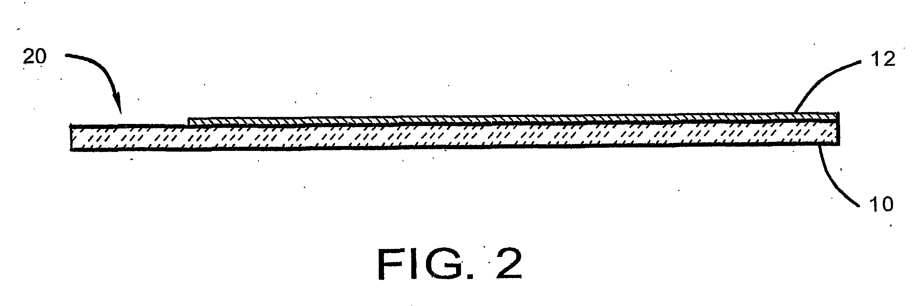

Fig. 2 is a cross-sectional view of a dielectric substrate carrying an organic functional coating, a portion of which has been removed by exposure to short wavelength UV light.

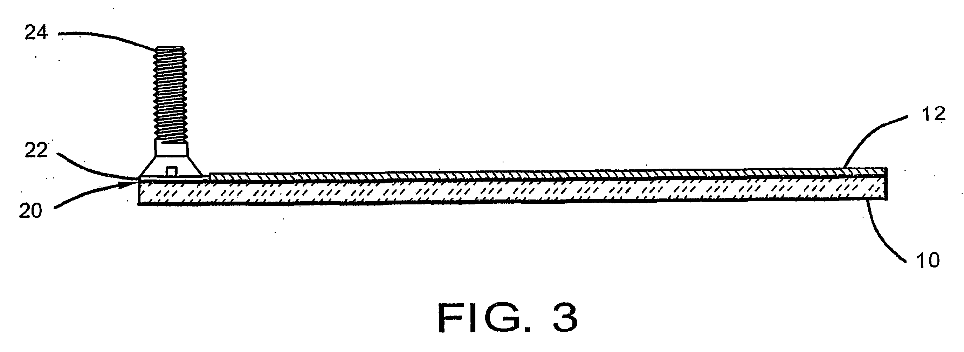

Fig. 3 is a cross-sectional view of a dielectric substrate as in Fig. 2 showing a fastening device adhered to the portion of the substrate from which the organic functional coating has been removed.

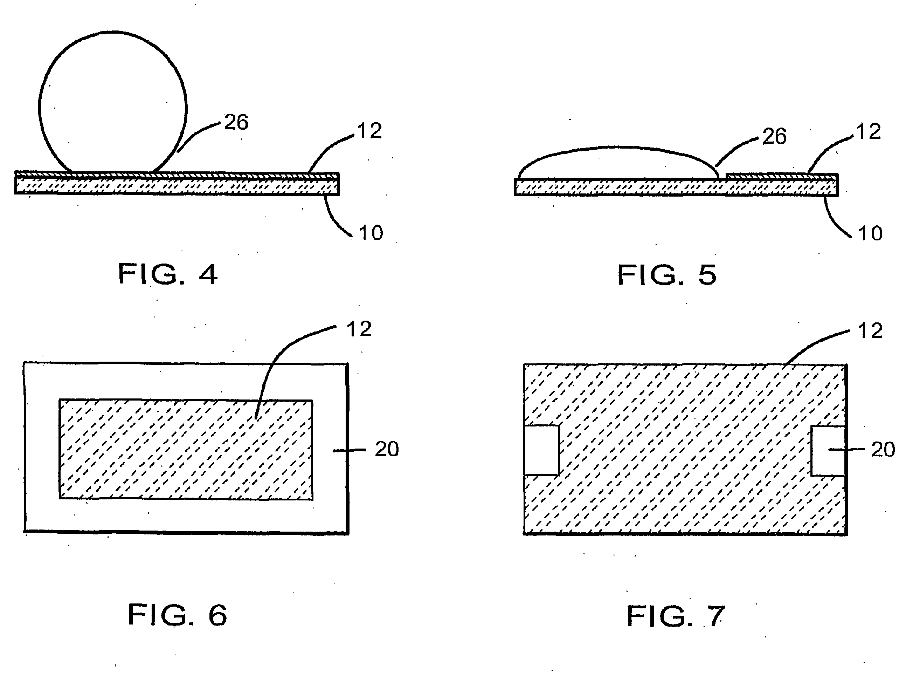

Figs. 4 and 5 are cross-sectional views showing the difference in the water contact angle of a water droplet on a substrate where the organic functional coating is intact, and where a portion of the coating has been removed, respectively.
Figs. 6 and 7 are plan views showing examples of how organic functional coatings may be selectively removed utilizing the present invention.

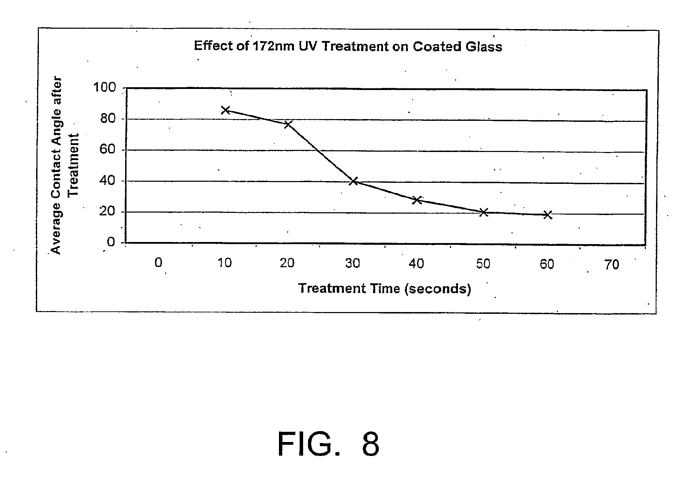

Fig. 8 is a graphical representation of the change in water contact angle with time of exposure to short wavelength UV light.

### DETAILED DESCRIPTION OF THE INVENTION

In order to accomplish the desired selective removal of organic functional coatings, the source of the short wavelength UV 14 light must be capable of emitting a beam of light which is primarily comprised of a single, dominant wavelength. Examples of such light sources are lasers, and excimer lamps. Manufacturers of suitable excimer lamps are, for example, Ushio Inc. and Heraeus Noblelight.

Such light sources 14 should also be capable of being focused on precisely defined portions of the coated substrate 10 from which removal of the coating 12 is desired. For example, the above-mentioned lasers and excimer lamps have been demonstrated to remove coatings 12 to a precision of +/- 1 mm.

Further, for purposes of the present invention, it is important that the source of short wavelength UV 14 light be capable of removing the organic functional coating 12 within a relatively short exposure period, so that the coating removal operation may be incorporated into a time-critical manufacturing process, such as the high-volume production of automotive glazings. To this end, it has been determined that organic functional coatings 12 such as polysiloxanes, polyfluorosiloxanes and diamond-like carbon may be effectively removed by exposure to short wavelength UV light, having a dominant wavelength of about 172 nm, in a range of 5 to 120 seconds. It has also been determined that such exposure times may be longer or shorter depending on the "strength" of the light source 14. By "strength" of the light source_is meant the number of watts of power transmitted to the coated surface per unit area, for example, units per square centimeter. Further, it has been determined that the distance between the light source and the surface of the coating is important to removal efficiency. For the lamp tested, having a "strength" of 50 watts/cm², optimal distance between the lamp and coating surface is, 0 to 2 mm.

The effective removal of the organic functional coating 12 by exposure to the short wavelength UV light can be determined by measuring the water contact angle 26 both before and after the prescribed exposure period. The "water contact angle" 26 is the angle measured from the horizontal, between the base of a water droplet which is in contact with the coated substrate 10, 12 and the surface of the substrate, or the surface of the substrate from which the coating has been removed 20. The water contact angle 26 is, typically, measured by a visual enhancement system,' for example, the system manufactured by AST Products, and a computer software package, for example, the package sold under the name VCA-2000 for Windows.

Utilizing the method of the subject invention, it has been found that the water contact angle 26 was reduced from greater than 100° to less than 30°, after exposure to the UV light, thus indicating that the coating 12 had been effectively removed from the desired area.

Once the organic functional coating 12 has been removed, the selected area may be made ready to have, for example, an elastomeric member or item of hardware attached to it. Preferably, an adhesion promoting primer 21, such as a silane primer, is applied to the selected area, after which an appropriate adhesive 22 is applied.

The elastomeric member may be, for example, a type of gasket. The adhesive 22 may be, any suitable adhesive, for example, cyanoacrylate, urethane, epoxy, acrylic, hot melt silicone, or pressure-sensitive adhesives.

Table 1 shows the results of several experiments wherein the time of exposure of the organic functional coating 12 to the short wave UV light 14 was doubled in Tests 1-5 but then was increased by 20 seconds for Test 6. Column A shows the change in water contact angle with exposure time as the hydrophobic coating is affected by the short wavelength UV light. "Tin side" refers to the major surface of the glass substrate which was in contact with the molten tin of the float bath during the glass manufacturing process. The hydrophobic coating had been deposited on that major surface of the substrate, and so was the side treated. Column B shows results for treatment of the coating also on the tin side of the glass substrate with the short wavelength UV light source at a distance of 7.7 mm from the surface of the organic functional coating. The change in water contact angle is significantly less dramatic than Column A where the distance between the UV light source and the coated surface was between 0 and 2 mm. As can be seen, the water contact angle 26 decreased significantly in all cases after a 40-second exposure, and with respect to Column A, had decreased significantly after only a 20-second exposure. It is applicant's opinion that with respect to Column A, the water contact angle 26 of 10º ± 3º after a 60-second exposure shows that the organic functional coating has been substantially completely removed.

The water contact angle in these tests was measured by the methodology previously described herein.

Table 2 shows the results of various tests to demonstrate the effectiveness of removal of the organic functional coating 12 in relation to the strength of the adhesive bond created when standard adhesion promoting primers 21, compatible adhesives 22 and an attachment means 24 are applied to an area from which the coating has been removed 20 by exposure to short wavelength UV light. The time intervals of exposure carry over from the tests shown in Table 1. Columns A-C show the dynamic load necessary to break the adhesive bond, and the predominant failure mode(s).

More specifically, column A shows results of exposure where the organic functional coating was deposited over a previously applied, typically by silk-screening, layer of a mixture of powdered glass, color pigment, and optionally, a powdered electrically conductive metal, such as silver.

Columns B and C shows the relative effectiveness of removal where the organic functional coating was deposited on the side of the glass in contact with the molten tin in the float bath (Column B), and where the organic functional coating had been deposited on the major surface of the glass which, in the glass manufacturing process, does not come into contact with the molten tin in the float bath, also known as the "air side" (Column C).

It can be seen that substantially improved adhesion was obtained in all cases after 40 seconds exposure to short wavelength UV light. Except for Column B, maximum adhesion occurred after 60 seconds exposure. After 60 seconds exposure, the adhesive bond was stronger than the glass substrate to which it was attached, as denoted by the predominant failure mode.

**Table 1 - Effect of Short Wavelength UV Exposure on Water Contact Angle**

| | Treatment Time | (A) Contact Angle Tin Side | (B) Contact Angle 7.7mm shim |
|---|---|---|---|
| 1 | No treatment | 111º ± 1º | 111º ± 1º |
| 2 | 5 seconds | 83º ± 26º | No change |
| 3 | 10 seconds | 67º ± 22º | No change |
| 4 | 20 seconds | 31º ± 12º | 109º ± 2º |
| 5 | 40 seconds | 19º ± 9º | 80º ± 29º |
| 6 | 60 seconds | 10º ± 3º | 100º ± 14º |

**Table 2 - Effect of Short Wavelength UV Exposure on Adhesion to Glass Substrate or Glass Substrate to which a Frit has been Applied**

| | Treatment Time | (A) AT3513 frit | |
|---|---|---|---|
| | | Shear Failure Load | Predominant Failure Mode(s) |
| 1 | No treatment | 301º ± 111 lbs. | PG |
| 2 | 5 seconds | 323º ± 82 lbs. | PG |
| 3 | 10 seconds | 453º ± 318 lbs. | PG |
| 4 | 20 seconds | 435º ± 141 lbs. | PG, LCFG |
| 5 | 40 seconds | 659º ± 71 lbs. | PG, GB |
| 6 | 60 seconds | 682º ± 58 lbs. | GB |
| | | | |

| | Treatment Time | (B) Tin Side | |
|---|---|---|---|
| | | Shear Failure Load | Predominant Failure Mode(s) |
| 1 | No treatment | 89º ± 38 lbs. | PG |
| 2 | 5 seconds | 211º ± 103 lbs. | PG, GB |
| 3 | 10 seconds | 539º ± 98 lbs. | PG, LCFG |
| 4 | 20 seconds | 670º ± 100 lbs. | LCFG, PG, GB |
| 5 | 40 seconds | 662º ± 113 lbs. | LCFG, GB, CF, LCFM, PG |
| 6 | 60 seconds | 600º ± 226 lbs. | LCFG, GB, PG |
| | | | |

| | Treatment Time | (C) Air Side | |
|---|---|---|---|
| | | Shear Failure Load | Predominant Failure Mode(s) |
| 1 | No treatment | 54º ± 29 lbs. | PG |
| 2 | 5 seconds | 335º ± 132 lbs. | LCFM, LCFG, PG |
| 3 | 10 seconds | 557º ± 168 lbs. | LCFM, LCFG |
| 4 | 20 seconds | 380º ± 159 lbs. | LCFM, PG |
| 5 | 40 seconds | 408º ± 47 lbs. | LCFM |
| 6 | 60 seconds | 594º ± 224 lbs. | LCFM, LCFG, GB |

| | | | |
|---|---|---|---|
| Notes: Adhesive = Essex 73100/73005, Primer = 43518/43520A, Substrate 2 = E-coated steel, Bond area = 0.5 x 1" Hydrophobic coating (NSG primer type) applied to glass using PNA pilot line 43518 primer wipe-on/wipe-off, 43520A = 30-minute cure at 70ºF, 50% R.H., 24-hour (min) adhesive cure UV treatment at PNA using Ushio handheld light Samples tested in Instron at 10mm/min. Sample assembly and testing by Andrea Schult | | | |

Table 3 shows the effects of exposure on multiple samples of glass carrying a hydrophobic coating to short wavelength UV light on the water contact angle in order to determine the repeatability of efficiently removing the coating. The exposure times are the same as in Tables 1 and 2. It can be seen that the water contact angle changes erratically with short exposure time (5-10 secs.) but becomes more predictable with exposure time of 15-60 seconds (See Columns A-C). Coating removal has been, essentially and repeatably, achieved after exposure of 40 seconds.

**Table 3 - Reproducibility of Effect of Exposure to 172nm UV Lamp on Sidelights Coated Samples**

| | | (A) | (B) | (C) | (D) | (E) |
|---|---|---|---|---|---|---|
| | | Contact | Contact | Contact | Average | Stdev |
| Sample | Time(s) | Angle 1 | Angle 2 | Angle 3 | | |
| 1 | 5 | 107.3 | 77.6 | 72.7 | 85.87 | 18.72 |
| 2 | 10 | 75.2 | 91.8 | 63.4 | 76.80 | 14.27 |
| 3 | 15 | 45.6 | 35.2 | 40.8 | 40.53 | 5.21 |
| 4 | 20 | 32.7 | 26.4 | 26.4 | 28.50 | 3.64 |
| 5 | 40 | 18.9 | 20.1 | 23 | 20.67 | 2.11 |
| 6 | 60 | 20.1 | 17.7 | 20.1 | 19.30 | 1.39 |

## Claims

1. A method for removing a selected portion (20) of a functional organic coating (12) having hydrophobic properties from the surface of a glass substrate (10) by contacting said coating (12) with short wavelength ultra-violet (UV) light, **characterized in that** said UV light is emanating from one of an excimer lamp or a laser (14) at a dominant wavelength between 100 nm and 200 nm for a time less than 120 seconds.

2. The method of claim 1, wherein the organic functional coating (12) having hydrophobic properties comprises a polysiloxane.

3. The method of claim 1, wherein the dominant wavelength of said short wavelength UV light is 172 nm.

4. The method of claim 1, wherein the water contact angle (26) on said substrate (10) carrying said coating (12) prior to contacting said coating (12) with said short wavelength UV light is greater than 100°.

5. The method of claim 4, wherein the water contact angle (26) on said substrate (10) after said coating (12) has been selectively removed by contact with said short wavelength UV light is less than 30° on those portions (20) of said substrate (10) from which said hydrophobic coating (12) has been removed.

6. The method of claim 1, wherein an adhesion promoting primer compound is applied to a portion (20) of said substrate (10) from which said functional organic coating (12) has been removed.

7. The method of claim 6, wherein an elastomeric member is bonded to said portion (20) of said substrate (10) to which the adhesion promoting primer has been applied.

8. The method of claim 7, wherein said elastomeric member is gasket.

## Patentansprüche

1. Verfahren zum Entfernen eines ausgewählten Bereichs (20) einer funktionellen organischen Beschichtung (12) mit hydrophoben Eigenschaften von der Oberfläche eines Glassubstrats (10) durch Kontaktieren der Beschichtung (12) mit kurzwelligem ultraviolettem (UV) Licht, **dadurch gekennzeichnet, dass** das UV-Licht von einer Excimerlampe oder einem Laser (14) bei einer vorherrschenden Wellenlänge zwischen 100 nm und 200 nm während einer Zeit von weniger als 120 Sekunden ausgestrahlt wird.

2. Verfahren nach Anspruch 1, bei dem die organische funktionelle Beschichtung (12) mit hydrophoben Eigenschaften ein Polysiloxan aufweist.

3. Verfahren nach Anspruch 1, bei dem die dominante Wellenlänge des kurzwelligen UV-Lichts gleich 172 nm ist.

4. Verfahren nach Anspruch 1, bei dem der Wasserkontaktwinkel (26) auf dem die Beschichtung (12) tragenden Substrat (10) vor der Kontaktierung der Beschichtung (12) mit dem kurzwelligen UV-Licht größer als 100° ist.

5. Verfahren nach Anspruch 4, bei dem der Wasserkontaktwinkel (26) auf dem Substrat (10), nachdem die Beschichtung (12) selektiv durch Kontakt mit dem kurzwelligen UV-Licht entfernt wurde, auf den Bereichen (12) des Substrats (10), von denen die hydrophobe Beschichtung (12) entfernt wurde, weniger als 30° ist.

6. Verfahren nach Anspruch 1, bei dem eine haftungsfördernde Primerverbindung auf einen Bereich (20) des Substrats (10), von dem die funktionelle organische Beschichtung (12) entfernt wurde, aufgebracht wird.

7. Verfahren nach Anspruch 6, bei dem ein elastomeres Teil mit dem Bereich (20) des Substrats (10), auf den der haftungsfördernde Primer aufgebracht wurde, verbunden wird.

8. Verfahren nach Anspruch 7, bei dem das elastomere Teil eine Dichtung ist.

## Revendications

1. Procédé pour retirer une partie sélectionnée (20) d'un revêtement organique fonctionnel (12) ayant des propriétés hydrophobes de la surface d'un substrat en verre (10) en mettant en contact ledit revêtement (12) avec une lumière ultra-violette (UV) de courte longueur d'onde, **caractérisé en ce que** ladite lumière UV émane de soit une lampe excimère soit un laser (14) à une longueur d'onde dominante entre 100 nm et 200 nm pendant un temps inférieur à 120 secondes.

2. Procédé selon la revendication 1, dans lequel le revêtement organique fonctionnel (12) ayant des propriétés hydrophobes comprend un polysiloxane.

3. Procédé selon la revendication 1, dans lequel la longueur d'onde dominante de ladite lumière UV de courte longueur d'onde est de 172 nm.

4. Procédé selon la revendication 1, dans lequel l'angle de contact avec l'eau (26) sur ledit substrat (10) portant ledit revêtement (12) avant la mise en contact dudit revêtement (12) avec ladite lumière UV de courte longueur d'onde est supérieur à 100°.

5. Procédé selon la revendication 4, dans lequel l'angle de contact avec l'eau (26) sur ledit substrat (10) après que ledit revêtement (12) a été retiré de façon sélective par mise en contact avec ladite lumière UV de courte longueur d'onde est inférieur à 30° sur les parties (20) dudit substrat (10) desquelles ledit revêtement hydrophobe (12) a été retiré.

6. Procédé selon la revendication 1, dans lequel un composé d'apprêt d'activation d'adhérence est appliqué sur une partie (20) dudit substrat (10) de laquelle ledit revêtement fonctionnel organique (12) a été retiré.

7. Procédé selon la revendication 6, dans lequel un élément élastomérique est lié à ladite partie (20) dudit substrat (10) sur laquelle l'apprêt d'activation d'adhérence a été appliqué

8. Procédé selon la revendication 7, dans lequel ledit élément élastomérique est un joint.
